# EUROPEAN PATENT APPLICATION

(11) **EP 2 833 606 A1**
(43) Date of publication of application: **04.02.2015**
(21) Application number: 13178428.2
(22) Date of filing: 29.07.2013
(51) Int. Cl.: H04M 1/725

(54) **Mobile wireless communications device providing bluetooth switchover features based upon near field communication (nfc)**

(71) Applicant: BlackBerry Limited, Waterloo, ON N2K 0A7 (CA)
(72) Inventor: Tubbesing, Stefan, 44799 Bochum (DE); Imtiaz, Fahd, Waterloo, Ontario, N2L 3W8 (CA); Nathwani, Sanjay, Mississauga, Ontario L4W 0B5 (CA)
(74) Representative: Greenaway, Martin William

(57) **Abstract**

A mobile wireless communications device (31) may include a near field communication "NFC" transceiver (32), a Bluetooth transceiver (33), and a controller (34) coupled with the NFC transceiver (32) and the Bluetooth transceiver (33). The controller (34) may be configured to communicate with a first Bluetooth device (35) via the Bluetooth transceiver (33) using at least one Bluetooth profile supported by the first Bluetooth device (35), communicate with a second Bluetooth device (36) via the NFC transceiver (32) and determine if the at least one Bluetooth profile is also supported by the second Bluetooth device (36), and when the at least one Bluetooth profile is also supported by the second Bluetooth device (36), cease using the at least one Bluetooth profile with the first Bluetooth device (35) and begin using the at least one Bluetooth profile with the second Bluetooth device (36).

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile communications devices. This short-range high frequency wireless communications technology exchanges data between devices over a short distance, such as only a few centimeters.

with NFC technology becoming more widely adopted, it is now used with portable wireless communications devices in association with other short-range wireless communications, such as a wireless Bluetooth connection. For example, an NFC connection may be used to establish a wireless Bluetooth connection in which data for establishing the Bluetooth connection is initially communicated.

### Brief Description of the Drawings

FIG. 1 is a schematic block diagram of a mobile wireless communications device in accordance with an example embodiment.

FIGS. 2A and 2B show respective upper and lower portions of a flow diagram illustrating method aspects associated with the mobile wireless communications device of FIG. 1.

FIGS. 3-5 are a series of schematic diagrams illustrating a use case for a mobile wireless communications device in accordance with an example embodiment.

FIG. 6 is a schematic block diagram illustrating example components which may be used with the mobile wireless communications devices of FIGS. 1 and 3-5.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile wireless communications device may include a near field communication (NFC) transceiver, a Bluetooth transceiver, and a controller coupled with the NFC transceiver and the Bluetooth transceiver. The controller may be configured to communicate with a first Bluetooth device via the Bluetooth transceiver using at least one Bluetooth profile supported by the first Bluetooth device, communicate with a second Bluetooth device via the NFC transceiver and determine if the at least one Bluetooth profile is also supported by the second Bluetooth device, and when the at least one Bluetooth profile is also supported by the second Bluetooth device, cease using the at least one Bluetooth profile with the first Bluetooth device and begin using the at least one Bluetooth profile with the second Bluetooth device. As such, a seamless switchover between the first and second Bluetooth devices may be provided.

More particularly, the controller may be configured to not cease using at least one other Bluetooth profile supported by the first Bluetooth device and not supported by the second Bluetooth device. Furthermore, the controller may be configured to cease using the at least one Bluetooth profile with the first Bluetooth device and begin using the at least one Bluetooth profile with the second Bluetooth device without user intervention. In an example embodiment, a display may be coupled with the controller, and the controller may be configured to display a connection confirmation with respect to the second Bluetooth device on the display.

The controller may further be configured to determine if the second Bluetooth device has been previously paired with the mobile wireless communications device based upon NFC communications therewith. More particularly, the controller may be configured to initiate a pairing attempt with the second Bluetooth device when the second Bluetooth device has not been previously paired with the mobile wireless communications device, and to determine if the at least one Bluetooth profile is also supported by the second Bluetooth device based upon the initiated pairing attempt. By way of example, the controller may be configured to determine if the at least one Bluetooth profile is also supported by the second Bluetooth device based upon a service discovery protocol (SDP).

A method for using a mobile wireless communications device, such as the one described briefly above, is also provided. The method may include communicating with a first Bluetooth device via the Bluetooth transceiver using at least one Bluetooth profile supported by the first Bluetooth device, communicating with a second Bluetooth device via the NFC transceiver and determining if the at least one Bluetooth profile is also supported by the second Bluetooth device, and when the at least one Bluetooth profile is also supported by the second Bluetooth device, ceasing using the at least one Bluetooth profile with the first Bluetooth device and beginning using the at least one Bluetooth profile with the second Bluetooth device.

A related non-transitory computer-readable medium is for a mobile wireless communications device, such as the one described briefly above. The non-transitory computer-readable medium may have computer-executable instructions for causing the mobile wireless communications device to at least communicate with a first Bluetooth device via the Bluetooth transceiver using at least one Bluetooth profile supported by the first Bluetooth device, communicate with a second Bluetooth device via the NFC transceiver and determine if the at least one Bluetooth profile is also supported by the second Bluetooth device, and when the at least one Bluetooth profile is also supported by the second Bluetooth device, cease using the at least one Bluetooth profile with the first Bluetooth device and begin using the at least one Bluetooth profile with the second Bluetooth device.

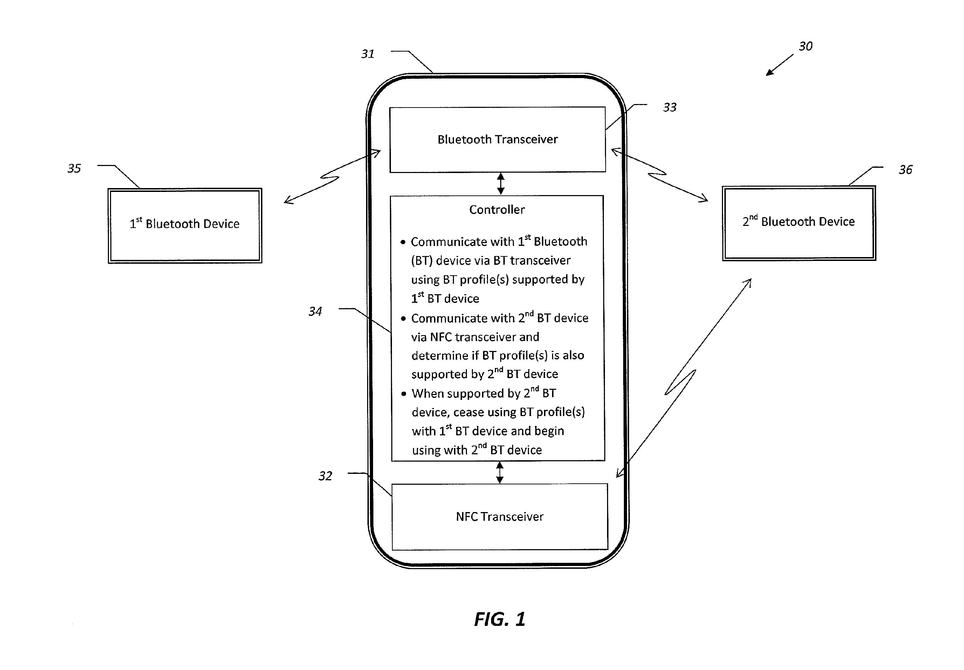

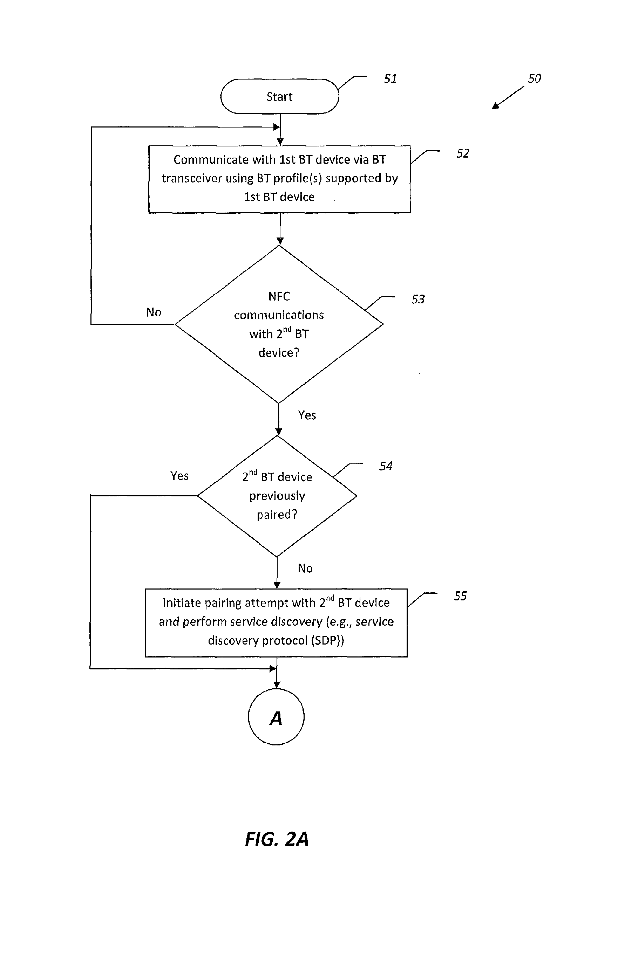

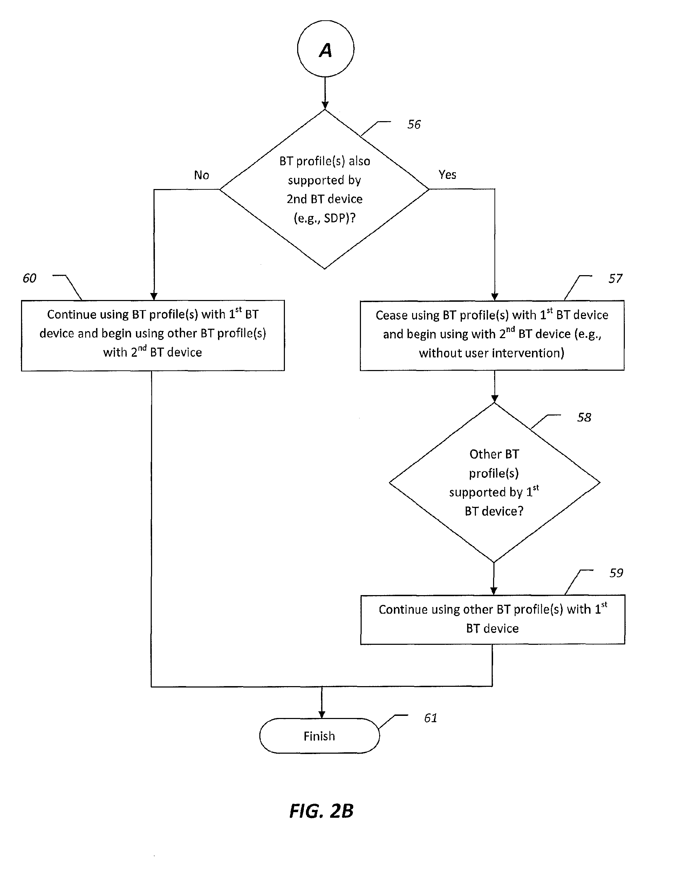

Referring initially to FIGS. 1, 2A and 2B, a system **30** illustratively including a mobile wireless communications device **31** (also referred to as a "mobile device" herein) and related method aspects are first described. The mobile device **31** illustratively includes a near field communication (NFC) transceiver **32,** a Bluetooth transceiver **33,** and a controller **34** coupled with the NFC transceiver and the Bluetooth transceiver. Example mobile devices **31** may include portable or personal media players (e.g., music or MP3 players, video players, etc.), portable gaming devices, portable or mobile telephones, smartphones, tablet computers, digital cameras, etc. The controller **34** may be implemented using a combination of hardware (e.g., microprocessor(s), etc.) and a non-transitory computer-readable medium having computer-executable instructions for causing the mobile device **32** to perform the various operations discussed herein.

By way of background, NFC is a short-range wireless communications technology in which NFC-enabled devices are "swiped," "bumped", "tapped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used. Bluetooth is also a relatively short-range wireless technology standard, but with an effective of range of up to several meters. The Bluetooth technology standard is set forth in the various Bluetooth Core Specifications (e.g., v1.0, v1.0B, v1.1, v1.2, v2.0 + EDR, v2.1 + EDR, v3.0 + HS, v4.0, etc.) from the Bluetooth Special Interest Group.

Beginning at Block **51** of the flow diagram **50,** the controller **34** may be configured to communicate with a first Bluetooth device **35** via the Bluetooth transceiver **33** using one or more Bluetooth profiles supported by the first Bluetooth device (Block **52).** Bluetooth profiles define specific aspects of Bluetooth wireless communication between devices. A given Bluetooth device will be compatible with the appropriate subset of Bluetooth profiles for the desired services (e.g., audio/video distribution, file transfer, etc.). A Bluetooth profile resides on top of the Bluetooth Core Specification and (optionally) additional protocols. Example Bluetooth profiles may include, but are not limited to, the following: Advanced Audio Distribution Profile (A2DP); Attribute Profile (ATT); Audio/Video Remote Control Profile (AVRCP); Basic Imaging Profile (BIP); Basic Printing Profile (BPP); Common ISDN Access Profile (CIP); Cordless Telephony Profile (CTP); Device ID Profile (DIP); Dial-up Networking Profile (DUN); Fax Profile (FAX); File Transfer Profile (FTP); Generic Audio/Video Distribution Profile (GAVDP); Generic Access Profile (GAP); Generic Attribute Profile (GATT); Generic Object Exchange Profile (GOEP); Hard Copy Cable Replacement Profile (HCRP); Health Device Profile (HDP); Hands-Free Profile (HFP); Human Interface Device Profile (HID); Headset Profile (HSP); Intercom Profile (ICP); LAN Access Profile (LAP); Message Access Profile (MAP); OBject EXchange (OBEX); Object Push Profile (OPP); Personal Area Networking Profile (PAN); Phone Book Access Profile (PBAP, PBA); Proximity Profile (PXP); Serial Port Profile (SPP); Service Discovery Application Profile (SDAP); SIM Access Profile (SAP, SIM, rSAP); Synchronization Profile (SYNCH); Video Distribution Profile (VDP); and Wireless Application Protocol Bearer (WAPB).

While the Bluetooth standards allow for simultaneous connection to multiple Bluetooth-enabled devices, problems may occur when switching between two different Bluetooth devices that both support (i.e., use) the same Bluetooth profiles. More particularly, if the first Bluetooth device **35** was connected with the mobile device **31** using an audio profile such as A2DP, if the mobile device was tapped with a second Bluetooth device **36** that also supported A2DP to initiate a Bluetooth connection therewith via NFC, under current Bluetooth configurations the A2DP profile would remain connected to the first Bluetooth device, irrespective of whether the user of the mobile device wanted to instead have audio or video functionality with the second Bluetooth device. Considered differently, under current implementations the given profile(s) connected to the first Bluetooth device **35** (A2DP in the present example) would be locked with the first Bluetooth device **35,** and to connect this profile with the second Bluetooth device **36** the user would have to manually disconnect the connection with both devices, and then re-initiate a new connection with the second Bluetooth device. Example Bluetooth devices may include other mobile devices, desktop computers, keyboards, a mouse, track pads, headsets, headphones, etc.

In accordance with one example embodiment, when an NFC "tap" with a second Bluetooth device **31** is initiated, the controller **34** cooperates with the NFC transceiver **32** to initiate NFC communication with the second Bluetooth device, at Block **53,** to thereby perform a Bluetooth handover (e.g., via a static or dynamic NFC connection handover). The controller **34** may then determine if the second Bluetooth device **36** has been previously paired with the mobile device **31,** at Block **54,** based upon the NFC communications. That is, the controller **34** may maintain a list of Bluetooth devices with which the mobile device **31** has previously been paired, as well as the appropriate credentials to initiate a Bluetooth connection with such devices, as will be appreciated by those skilled in the art. If a previous pairing has not occurred, the controller **54** may initiate a pairing attempt with the second Bluetooth device **36,** and determine if the Bluetooth profile(s) in use by the first Bluetooth device **35** is also supported by the second Bluetooth device **36** based upon the initiated pairing attempt, at Block **55.** By way of example, the controller **34** may perform the discovery of the supported Bluetooth profiles based upon a Bluetooth service discovery protocol (SDP), for example.

with the Bluetooth profiles supported by the second Bluetooth device **36** being known either as a result of the pairing sequence, or from a prior pairing sequence, the controller **34** may then determine if the Bluetooth profile(s) currently connected with the first Bluetooth device **35** is also supported by the second Bluetooth device **36,** at Block **56.** When there is an overlap between a supported Bluetooth profile(s), the controller **34** may accordingly cease using or drop the overlapping Bluetooth profile(s) with the first Bluetooth device 35 and begin using the Bluetooth profile(s) with the second Bluetooth device, at Block **57.** More particularly, this may be done "automatically" by the controller **34,** without the necessity of user intervention, such as by prompting the user to authorize the switch over (although a user prompt could be used in some embodiments, if desired).

As such, a seamless switchover between the first and second Bluetooth devices **35, 36** may be provided, without the necessity for the user to manually disconnect from the first Bluetooth device to free up the given Bluetooth profile(s), and disconnect and re-connected the second Bluetooth device **36** to then use the given Bluetooth profile(s) with the second Bluetooth device. That is, the above-described configuration provides the ability to connect to the second Bluetooth device 36 via NFC while already connected to the first Bluetooth device 35, and thereby seamlessly switch Bluetooth devices with an NFC tap.

In some embodiments, for Bluetooth profiles that are supported by the first Bluetooth device **35** and not by the second Bluetooth device **36,** the mobile device **31** may maintain the connection to the first Bluetooth accessory with these nonoverlapping profile(s), at Blocks **58-59.** More particularly, the controller **34** may be configured to not cease using another Bluetooth profile(s) supported by the first Bluetooth device **35** and not supported by (i.e., not overlapping with) the second Bluetooth device **36,** as will be discussed further below. However, if the second Bluetooth device **36** does not support any Bluetooth profiles that overlap (i.e., are shared in common with) with the first Bluetooth device **35,** then the Bluetooth profiles connected or in use with the first Bluetooth device may remain in use with the first Bluetooth device, and the other Bluetooth profiles supported by the second Bluetooth device may be connected or used with the second Bluetooth device simultaneously, at Block **60.** The method shown in FIGS. 2A-2B is illustratively concluded at Block **61.**

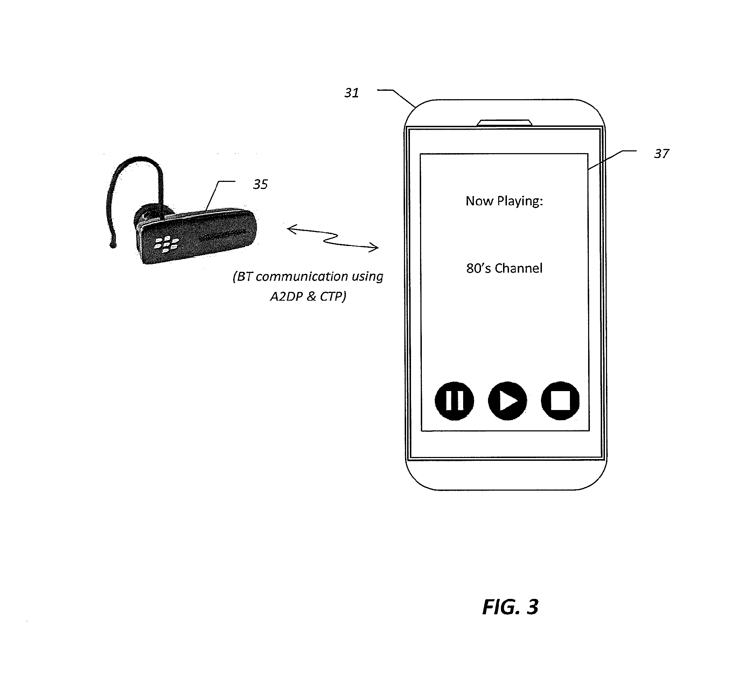

The foregoing will be further understood with reference to an example illustrated in FIGS. 3-5. In the example embodiment, the mobile device **31** is a smartphone which illustratively includes a display **37** coupled with the controller **34** (not shown in FIGS. 3-5). In the first instance (FIG. 3), the mobile device **31** is connected with the first Bluetooth device **35** (here a Bluetooth headset) using three Bluetooth profiles, namely A2DP, AVRCP, and CTP, and the mobile device is streaming music (here the "80's Channel") to the first Bluetooth device.

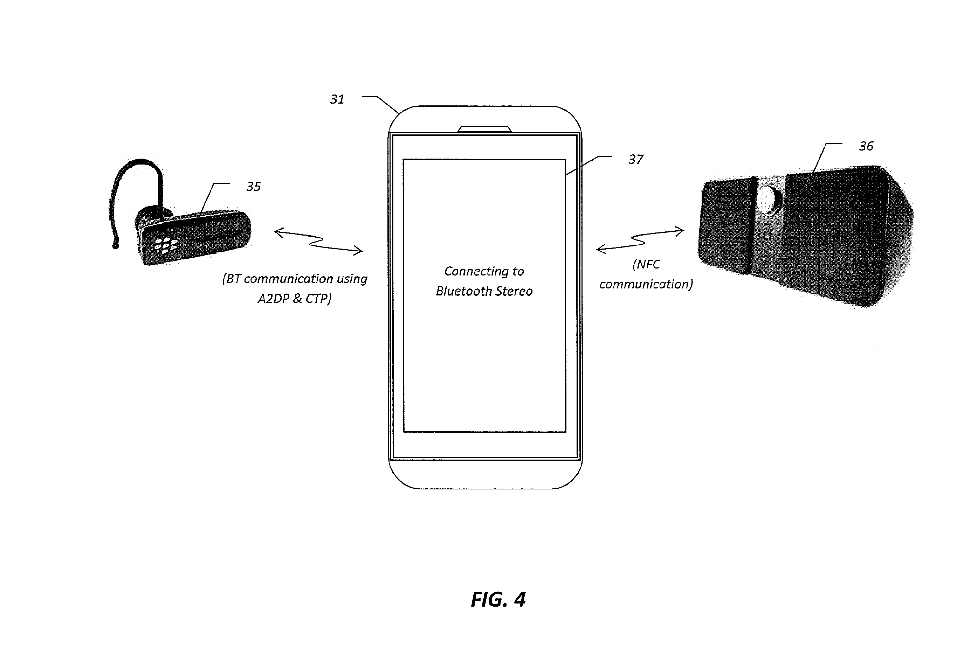

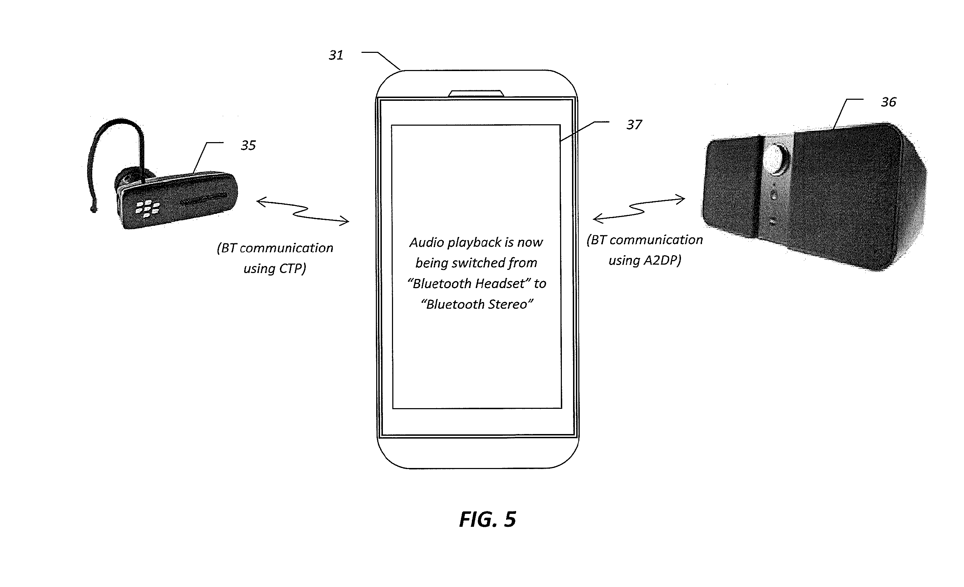

At a second time (FIG. 4), a user connects to the second Bluetooth device **36** (here a Bluetooth stereo) via an NFC tap. The controller **34** optionally displays a "toast" on the display **37** saying "Connecting to Bluetooth Stereo", as shown. If the second Bluetooth device **36** is already in the paired device list on the mobile device **31,** as discussed above, the controller **34** disconnects the profiles supported by the second Bluetooth device from the first Bluetooth device **35,** which in the present example are A2DP and AVRCP, and initiates a connection using these supported profiles with the second Bluetooth device (FIG. 5). The controller **34** optionally displays a toast confirming successful connection to the second Bluetooth device **36** on the display **37,** namely that "Audio playback is now being switched from 'Bluetooth Headset' to 'Bluetooth Stereo'". As noted above, if the second Bluetooth device **36** were not already paired with the mobile device **31,** the NFC tap would initiate a pairing attempt towards the second Bluetooth device through which its supported profiles would be discovered (e.g., through SDP records, etc.).

However, since the second Bluetooth device **36** does not support the CTP profile in this example, the controller **37** leaves this profile connected with the first Bluetooth device **35.** Thus, music streaming from the mobile device **31** is switched over to the second Bluetooth device **36** so that the music instead plays through the Bluetooth stereo, but voice calls, etc., are still routed to the first Bluetooth device **35** via the CTP profile, as will be appreciated by those skilled in the art.

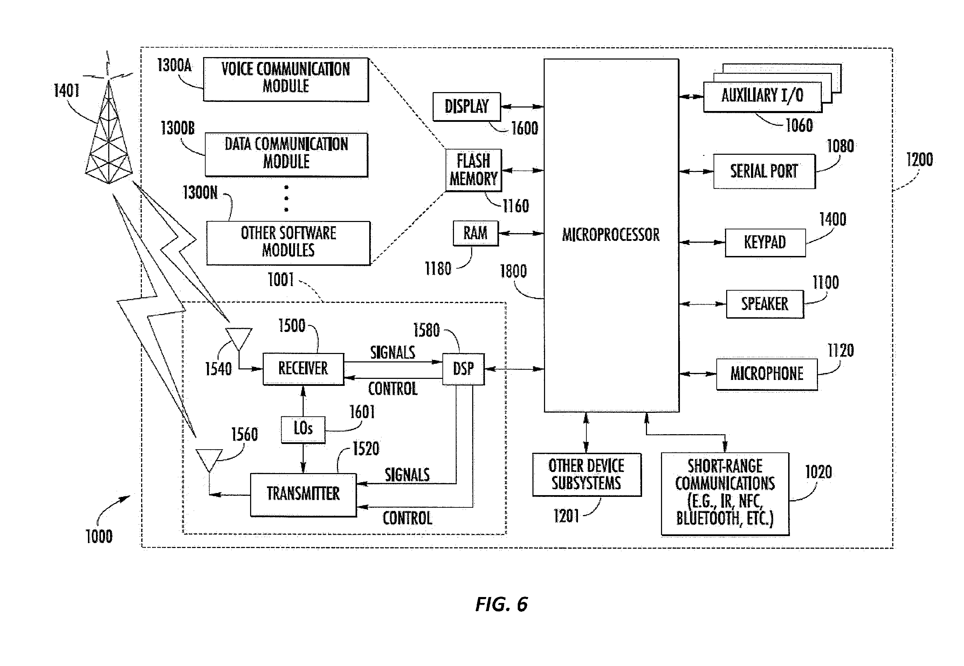

Example components of a mobile communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may include a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may include a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, LTE, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (31) comprising:
a near field communication, NFC, transceiver (32);
a Bluetooth transceiver (33); and
a controller (34) coupled with said NFC transceiver and said Bluetooth transceiver, said controller configured to
communicate with a first Bluetooth device (35) via said Bluetooth transceiver using at least one Bluetooth profile supported by the first Bluetooth device,
communicate with a second Bluetooth device (36) via said NFC transceiver and determine if the at least one Bluetooth profile is also supported by the second Bluetooth device, and
when the at least one Bluetooth profile is also supported by the second Bluetooth device, cease using the at least one Bluetooth profile with the first Bluetooth device and begin using the at least one Bluetooth profile with the second Bluetooth device.

2. The mobile wireless communications device of Claim 1 wherein said controller is configured to not cease using at least one other Bluetooth profile supported by the first Bluetooth device and not supported by the second Bluetooth device.

3. The mobile wireless communications device of Claim 1 wherein said controller is configured to cease using the at least one Bluetooth profile with the first Bluetooth device and begin using the at least one Bluetooth profile with the second Bluetooth device without user intervention.

4. The mobile wireless communications device of Claim 1 further comprising a display (37) coupled with said controller; and wherein said controller is configured to display a connection confirmation with respect to the second Bluetooth device on said display.

5. The mobile wireless communications device of Claim 1 wherein said controller is further configured to determine if the second Bluetooth device has been previously paired with the mobile wireless communications based upon NFC communications therewith.

6. The mobile wireless communications device of Claim 5 wherein said controller is further configured to initiate a pairing attempt with the second Bluetooth device when the second Bluetooth device has not been previously paired with the mobile wireless communications device, and to determine if the at least one Bluetooth profile is also supported by the second Bluetooth device based upon the initiated pairing attempt.

7. The mobile wireless communications device of Claim 6 wherein said controller is configured to determine if the at least one Bluetooth profile is also supported by the second Bluetooth device based upon a service discovery protocol, SDP.

8. A method for using a mobile wireless communications device (31) comprising a near field communication, NFC, transceiver (32) and a Bluetooth transceiver (33), the method comprising:
communicating with a first Bluetooth device (35) via the Bluetooth transceiver using at least one Bluetooth profile supported by the first Bluetooth device;
communicating with a second Bluetooth device (36) via the NFC transceiver and determining if the at least one Bluetooth profile is also supported by the second Bluetooth device; and
when the at least one Bluetooth profile is also supported by the second Bluetooth device, ceasing using the at least one Bluetooth profile with the first Bluetooth device and beginning using the at least one Bluetooth profile with the second Bluetooth device.

9. The method of Claim 8 further comprising not ceasing using at least one other Bluetooth profile supported by the first Bluetooth device and not supported by the second Bluetooth device when the at least one Bluetooth profile is also supported by the second Bluetooth device.

10. The method of Claim 8 wherein ceasing comprises ceasing using the at least one Bluetooth profile with the first Bluetooth device and beginning using the at least one Bluetooth profile with the second Bluetooth device without user intervention.

11. The method of Claim 8 wherein the mobile wireless communications device further comprises a display (37) coupled with the controller; and further comprising displaying a connection confirmation with respect to the second Bluetooth device on the display.

12. The method of Claim 8 further comprising determining if the second Bluetooth device has been previously paired with the mobile wireless communications based upon NFC communications therewith.

13. The method of Claim 12 further comprising initiating a pairing attempt with the second Bluetooth device when the second Bluetooth device has not been previously paired with the mobile wireless communications device; and wherein determining comprises determining if the at least one Bluetooth profile is also supported by the second Bluetooth device based upon the initiated pairing attempt.

14. The method of Claim 13 wherein determining comprises determining if the at least one Bluetooth profile is also supported by the second Bluetooth device based upon a service discovery protocol, SDP.
